# EUROPÄISCHE PATENTSCHRIFT

(11) **EP 1 737 717 B1**
(45) Veröffentlichungstag und Bekanntmachung des Hinweises auf die Patenterteilung: **12.08.2009**
(21) Anmeldenummer: 05733709.9
(22) Anmeldetag: 13.04.2005
(51) Int. Cl.: B61H 7/08

(54) **MAGNETSCHIENENBREMSVORICHTUNG**
MAGNETIC RAIL BRAKE DEVICE
DISPOSITIF DE FREIN ELECTROMAGNETIQUE SUR RAILS

(30) Priorität: 14.04.2004 DE 102004018010
(43) Veröffentlichungstag der Anmeldung: 03.01.2007
(73) Patentinhaber: KNORR-BREMSE Systeme für Schienenfahrzeuge GmbH, 80809 München (DE)
(72) Erfinder: LEHMANN, Henry, A-2371 Hinterbrühl (AT); KOIDL, Hermann, A-1140 Wien (AT); SCHMIED, Lothar, A-2340 Mödling (AT); RATHAMMER, Richard, A-2262 Grub (AT); HAAS, Stefan, A-2340 Mödling (AT)
(74) Vertreter: Schönmann, Kurt
(86) Internationale Anmeldenummer: PCT/EP2005/003883
(87) Internationale Veröffentlichungsnummer: WO 2005/100121

(56) Entgegenhaltungen:
- DE-A1- 10 009 270
- DE-A1- 19 619 409
- GB-A- 191 226 295
- US-A- 2 564 945

## Beschreibung

### Stand der Technik

Die Erfindung betrifft eine Magnetschienenbremsvorrichtung eines Schienenfahrzeugs beinhaltend wenigstens einen Bremsmagneten, der einen Magnetspulenkörper, an welchem mehrere magnetische Magnetglieder beweglich gehalten sind, sowie wenigstens eine parallel zur Längserstreckung des Magnetspulenkörpers verlaufende, mit diesem unmittelbar in Verbindung stehende Befestigungsleiste zur Befestigung des Bremsmagneten an weiteren Bauelementen der Magnetschienenbremsvorrichtung umfasst, gemäß dem Oberbegriff von Patentanspruch 1.

Eine gattungsbildende Magnetschienenbremse ist beispielsweise in der DE 196 19 409 A1 beschrieben. Die krafterzeugende Hauptkomponente einer elektrischen Magnetschienenbremse ist der Bremsmagnet. Er ist im Prinzip ein Elektromagnet, bestehend aus einer sich in Schienenrichtung erstreckenden Magnetspule und einem hufeisenähnlichen Magnetkern, welcher den Grund- oder Trägerkörper bildet. Der in der Magnetspule fließende Gleichstrom bewirkt eine magnetische Spannung, die in dem Magnetkern einen magnetischen Fluss erzeugt, der sich über den Schienenkopf kurzschließt, sobald der Bremsmagnet auf der Schiene aufliegt. Dadurch kommt eine magnetische Anziehungskraft zwischen Bremsmagnet und Schiene zustande. Durch die kinetische Energie des bewegten Schienenfahrzeugs wird die Magnetschienenbremse über Mitnehmer entlang der Schiene gezogen. Hierbei entsteht durch die Gleitreibung zwischen Bremsmagnet und Schiene in Verbindung mit der magnetischen Anziehungskraft eine Bremskraft. Die Größe der Bremskraft einer Magnetschienenbremse ist u.a. vom magnetischen Widerstand des Magnetkreises, d.h. der Geometrie und Permeabilität, der elektrischen Durchflutung, dem Reibwert zwischen Bremsmagnet und Schiene sowie dem Schienenzustand abhängig.

Betreffend die Ausführungsformen von Magnetschienenbremsen wird auch auf die Veröffentlichung "Grundlagen der Bremstechnik", Seite 92 bis 97 der Knorr-Bremse AG, München, 2003 verwiesen.

Prinzipiell kann man nach dem konstruktiven Aufbau zwei verschiedene Arten von Magneten unterscheiden. In einer ersten Ausführungsform ist der Bremsmagnet ein Starrmagnet, mit dem zwei Verschleißleisten verschraubt werden, die durch eine unmagnetische Leiste in Längsrichtung getrennt sind. Dies dient zur Vermeidung eines magnetischen Kurzschlusses innerhalb des Bremsmagneten. Starrmagneten werden meist im Nahverkehr bei Strassen- und Stadtbahnen eingesetzt.

Weiterhin sind gattungsgemäße Gliedermagneten bekannt, bei welchen der Magnetspulenkörper keinen durchgehenden starren Stahlkem besitzt, sondern zwischen den Stahlkemen lediglich durch Trennwände abgeteilte offene Kammern aufweist. In die einzelnen Kammern werden Magnetglieder eingesetzt, die während des Bremsvorgangs beweglich sind. Damit können sie Unebenheiten am Schienenkopf folgen. Gliedermagneten werden standardmäßig im Vollbahnbereich eingesetzt. Bei bekannten Gliedermagneten kann wenigstens eine parallel zur Längserstreckung des Magnetspulenkörpers verlaufende, mit diesem unmittelbar in Verbindung stehende Befestigungsleiste zur Befestigung des Bremsmagneten an weiteren Bauelementen der Magnetschienenbremsvorrichtung wie beispielsweise an Spurhaltern oder an Flanschen von Betätigungszylindern vorhanden sein. Hierbei kann es durch die Spurhalter oder Flansche der Betätigungszylinder zu magnetischen Kurzschlüssen kommen, welche die Haltekraft der Gliedermagneten an der Schiene nachteilig verringern.

Bei der GB 26295 A sind den dortigen Magneten mit dem Rahmen tragend verbundene säulenartige Halter vorhanden und zusätzlich zwei mit dem Magneten verbundene Anschläge mit der Funktion, den Magneten gegen die beim Kontakt mit Schiene entstehende Reibkraft an einem mit dem Rahmen verbundenen Träger in Fahrtrichtung abzustützen. Dabei ergibt sich das Problem, dass der den Anschlägen zwischengeordnete Träger zunächst nur mit einem der beiden Anschläge des Magneten während einer Bremsung in Kontakt gerät und sich dadurch ein unsymmetrischer Magnetfluss zugunsten dieses einen Anschlags und zu ungunsten des anderen Anschlags ergibt, so dass der Magnet dadurch an dem einen Anschlag infolge des magnetischen Kurzschlusses durch Magnetkräfte einseitig festgehalten wird und sich infolgedessen eine zusätzliche, unerwünschte Reibkraft zwischen dem Magneten und dem Träger ergibt, die der Vertikalbewegung des Magneten und dadurch dem Anpressdruck auf die Schiene entgegenwirkt. Deshalb wird jeweils eine nicht-magnetische Schicht zwischen den Anschlägen und dem Träger vorgesehen, welche einen magnetischen Kurzschluss zwischen den Anschlägen und dem Träger verhindern soll. Dabei handelt es sich jedoch gegenüber den Anschlägen bzw. Träger um zusätzliche Bauelemente, welche monofunktional nur zum Verhindern eines magnetischen Kurzschlusses dienen.

### Aufgabe der Erfindung

Die Aufgabe der Erfindung besteht demgegenüber darin, eine Magnetschienenbremsvorrichtung der eingangs erwähnten Art derart weiterzubilden, dass sie bei einfachem Aufbau und geringen Fertigungskosten eine möglichst hohe Bremsleistung liefert.

Diese Aufgabe wird dadurch gelöst, dass die Befestigungsleiste aus einem diamagnetischen oder paramagnetischen Material besteht.

### Vorteile der Erfindung

Unter einem diamagnetischen Material wird allgemein ein Material verstanden, dessen Permeabilitätszahl kleiner als 1 ist und weiches das magnetische Feld schwächt, beispielsweise Silber und Kupfer. Paramagnetische Materialien weisen eine Permeabilitätszahl wenig mehr als 1 auf und verstärken das magnetische Feld geringfügig, beispielsweise Aluminium, Platin oder Luft. Diese Materialien unterscheiden sich bezüglich ihrer Wirkung auf das magnetische Feld deutlich von ferromagnetischen Materialien wie beispielsweise Eisen, Kobalt, Nickel, welche das magnetische Feld erheblich stärken.

Indem erfindungsgemäß vorgesehen ist, dass die Befestigungsleiste aus einem diamagnetischen oder paramagnetischen Material besteht, bedingt sie eine Schwächung bzw. eine nur geringfügige Verstärkung des magnetischen Feldes, so dass der magnetische Streufluss auf den Magnetspulenkörper gegenüber einer Befestigungsleiste aus ferromagnetischem Material deutlich reduziert wird, was eine vorteilhaft hohe magnetische Haltekraft bedingt. Die Befestigungsleiste erfüllt somit eine vorteilhafte Doppelfunktion, indem sie einerseits den Magnetspulenkörper an den Anbauteilen hält und andererseits dazu beiträgt, durch diese bedingte magnetische Kurzschlüsse zu vermeiden. Infolgedessen sind keine zusätzlichen Trennkörper aus dia- oder paramagnetischem Material notwendig.

Durch die in den Unteransprüchen aufgeführten Maßnahmen sind vorteilhafte Weiterbildungen und Verbesserungen der im Anspruch 1 angegebenen Erfindung möglich.

### Zeichnungen

Nachfolgend soll die Erfindung anhand der Zeichnung beispielhaft dargestellt werden. In der Zeichnung zeigt
- Fig.1: eine perspektivische Seitenansicht einer erfindungsgemäßen Magnetschienenbremse gemäß einer bevorzugten Ausführungsform mit einem Bremsmagneten beinhaltend mehrere Magnetglieder;
- Fig.2: eine perspektivische Seitenansicht des Bremsmagneten von Fig.1;
- Fig.3: eine Querschnittsdarstellung des Magnetspulenkörpers.

### Beschreibung eines Ausführungsbeispiels

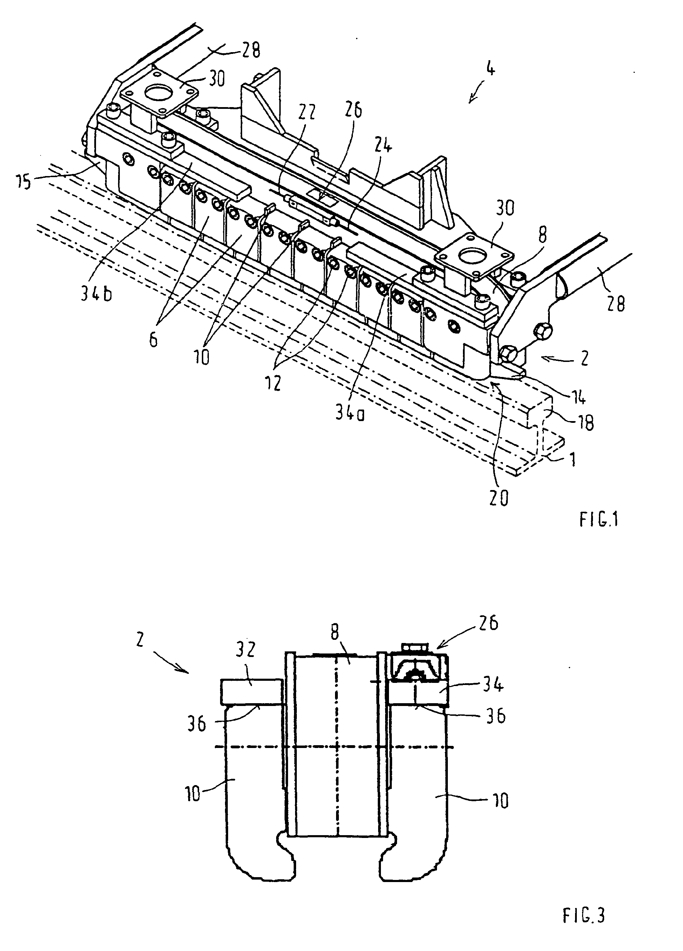

Um sich besser an Unebenheiten einer Schiene 1 anpassen zu können, ist bei einer in Fig. 1 gezeigten bevorzugten Ausführungsform eines Bremsmagneten 2 einer Magnetschienenbremse 4 anstatt eines einzigen Magneten eine Vielzahl von Magnetglieder 6 vorhanden, welche an einem sich in Längsrichtung der Schiene 1 erstreckenden Magnetspulenkörper 8 begrenzt beweglich gehalten sind. Dies ist vorzugsweise dadurch gelöst, dass die Magnetglieder 6 symmetrisch zu einer vertikalen Mittelebene an den voneinander weg weisenden Seitenflächen des Magnetspulenkörpers 8 in zwischen Trennwänden 10 gebildeten Kammern beispielsweise durch Schraubverbindungen 12 begrenzt kipp- bzw. schwenkbar aufgehängt sind. Die Übertragung der Bremskräfte auf den Magnetspulenkörper 8 erfolgt dann über die Trennwände 10. Endstücke 14, 15 sind starr mit dem Magnetspulenkörper 8 verbunden und geben dem Bremsmagnet 2 über Weichen und Schienenstößen eine gute Führung. Der Magnetspulenkörper 8, der eine von außen nicht sichtbare Magnetspule beinhaltet, trägt folglich die Magnetglieder 6, welche einen Magnetkern des Bremsmagneten 2 bilden.

Die Magnetglieder 6 sind am Magnetspulenkörper 8 derart festgelegt, dass ihre der Schiene 1 zugewandten unteren Enden 16 über den Magnetspulenkörper 8 hinausragen und dadurch im Querschnitt parallel zueinander verlaufende Schenkel sowie Polschuhe 16 (Nord- beziehungsweise Südpol) des Bremsmagneten 2 ausbilden. Zwischen den Polschuhen 16 und einem Schienenkopf 18 der Schiene 1 ist dann ein Luftspalt 20 vorhanden.

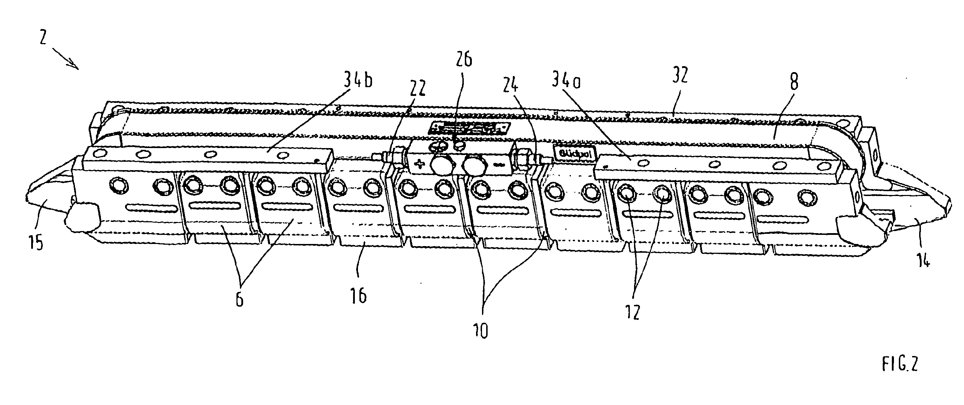

Wie am besten Fig.2 zeigt, ist, um die Magnetspule mit elektrischer Spannung zu versorgen, eine wenigstens zwei elektrische Anschlüsse 22, 24 für den Plus- bzw. Minuspol einer Spannungsquelle aufweisende Anschlusseinrichtung 26 vorhanden, welche beispielsweise im oberen Bereich einer Seitenfläche des Magnetspulenkörpers 8, bezogen auf dessen Längserstreckung etwa mittig angeordnet ist. Die elektrischen Anschlüsse 22, 24 weisen bevorzugt voneinander weg und erstrecken sich in Längsrichtung des Magnetspulenkörpers 8.

Bei Hochaufhängung der Magnetschienenbremse 4 werden zwei symmetrisch über den Schienen 1 angeordnete Bremsmagnete 2, von welchen in Fig.1 nur einer gezeigt ist, mit Spurhaltern 28 zu einem festen Bremsenviereck verbunden und über in Fig.1 aus Maßstabsgründen nicht gezeigte Betätigungszylinder im Fahrwerk montiert. Speicherfedern in den drucklosen Betätigungszylindern drücken das Bremsenviereck in die Hochlage. Die Betätigungszylinder stehen über Flansche 30 mit den zugeordneten Bremsmagneten 2 in Verbindung.

Um den Magnetspulenkörper 8 an Anbauteilen der Magnetschienenbremse 4, wie beispielsweise an den Spurhaltern 28 oder an den Flanschen 30 der Betätigungszylinder zu befestigen, sind parallel zur Längserstreckung des Magnetspulenkörpers 8 verlaufende, mit diesem unmittelbar in Verbindung stehende Befestigungsleisten 32, 34 vorgesehen. Bevorzugt in Längserstreckung des Magnetspulenkörpers 8 gesehen ist je eine Befestigungsleiste 32, 34 an einer Seitenfläche des Magnetspulenkörpers 8, jeweils unmittelbar oberhalb einer oberen Stirnfläche 36 der Magnetglieder 6 angeordnet (Fig.3). Hierbei erstreckt sich die eine Befestigungsleiste 32 im wesentlichen von einem Endstück 14 zum anderen Endstück 15 des Bremsmagneten 2, während die andere Befestigungsleiste 34 zweitgeteilt ist und den beiden Teilen 34a und 34b die Anschlusseinrichtung 26 zwischengeordnet ist (Fig.2). Die beiden Befestigungsleisten 32, 34 sind jeweils mit dem Magnetspulenkörper 8 verschweißt und bilden mit diesem zusammen eine Schweißbaugruppe.

Wenn nun der in der Magnetspule fließende Gleichstrom eine magnetische Spannung bewirkt, die in dem aus den Magnetglieder 6 bestehenden Magnetkern einen magnetischen Fluss erzeugt, der sich über den Schienenkopf 18 kurzschließt, sobald der Bremsmagnet 2 auf der Schiene 1 aufliegt, kann es durch Anbauteile wie die Spurhalter 28 oder die Flansche 30 zu magnetischen Kurzschlüssen kommen, welche die Haltekraft der Magnetglieder 6 an der Schiene 1 nachteilig verringern.

Erfindungsgemäß besteht deshalb zumindest eine der Befestigungsleisten 32, 34 aus einem diamagnetischen oder paramagnetischen Material. Dadurch wird eine Schwächung bzw. eine nur geringfügige Verstärkung des magnetischen Feldes bewirkt, so dass der magnetische Streufluss auf den Magnetspulenkörper 8 deutlich reduziert wird, was eine vorteilhaft hohe magnetische Haltekraft bedingt.

### Bezugszahlenliste

- 1: Schiene
- 2: Bremsmagneten
- 4: Magnetschienenbremse
- 6: Magnetglieder
- 8: Magnetspulenkörper
- 10: Trennwände
- 12: Schraubverbindung
- 14: Endstück
- 15: Endstück
- 16: unteres Ende
- 18: Schienenkopf
- 20: Luftspalt
- 22: elektr. Anschluss
- 24: elektr. Anschluss
- 26: Anschlusseinrichtung
- 28: Spurhalter
- 30: Flansch
- 32: Befestigungsleiste
- 34: Befestigungsleiste
- 34a: Teil
- 34b: Teil
- 36: obere Stirnfläche

## Patentansprüche

1. Magnetschienenbremsvorrichtung (4) eines Schienenfahrzeugs beinhaltend wenigstens einen Bremsmagneten (2), der einen Magnetspulenkörper (8), an welchem mehrere magnetische Magnetglieder (6) beweglich gehalten sind, sowie wenigstens eine parallel zur Längserstreckung des Magnetspulenkörpers (8) verlaufende, mit diesem unmittelbar in Verbindung stehende Befestigungsleiste (32, 34) zur Befestigung des Bremsmagneten (2) an weiteren Bauelementen der Magnetschienenbremsvorrichtung (4) umfasst, **dadurch gekennzeichnet, dass** die Befestigungsleiste (32, 34) aus einem diamagnetischen oder paramagnetischen Material besteht.

2. Magnetschienenbremsvorrichtung nach Anspruch 1, **dadurch gekennzeichnet, dass** in Längserstreckung des Magnetspulenkörpers (8) gesehen je eine im wesentlichen von einem Endstück (14) zum anderen Endstück (15) des Magnetspulenkörpers (8) durchgehende Befestigungsleiste (32, 34) an einer Seitenfläche des Magnetspulenkörpers (8) angeordnet ist.

3. Magnetschienenbremsvorrichtung nach Anspruch 1, **dadurch gekennzeichnet, dass** eine Befestigungsleiste (32) sich im wesentlichen von einem Endstück (14) zum anderen Endstück (15) des Magnetspulenkörpers (8) durchgehend erstreckt und die andere Befestigungsleiste (34) zweitgeteilt ist, wobei den beiden Teilen (34a, 34b) der Befestigungsleiste (34) eine Anschlusseinrichtung (26) für eine Spannungsquelle zwischengeordnet ist.

4. Magnetschienenbremsvorrichtung nach wenigstens einem der vorhergehenden Ansprüche, **dadurch gekennzeichnet, dass** die wenigstens eine Befestigungsleiste (32, 34) mit dem Magnetspulenkörper (8) eine Schweißbaugruppe bildet.

5. Magnetschienenbremsvorrichtung nach wenigstens einem der vorhergehenden Ansprüche, **dadurch gekennzeichnet, dass** wenigstens eine Befestigungsleiste (32, 34) an Flanschen (30) für Betätigungszylinder, Spurhalter (28) oder andere Anbauteile lösbar befestigt ist.

## Claims

1. A magnetic rail brake device (4) of a rail vehicle containing at least one braking magnet (2), which comprises a magnet coil body (8), on which a plurality of magnetic magnet elements (6) are held such that they can move, and at least one fixing strip (32, 34), which runs parallel to the longitudinal extent of the magnet coil body (8) and is directly connected to said magnet coil body, for the purpose of fixing the braking magnet (2) to further components of the magnetic rail brake device (4), **characterized in that** the fixing strip (32, 34) consists of a diamagnetic or paramagnetic material.

2. The magnetic rail brake device as claimed in claim 1, **characterized in that,** when viewed in the longitudinal extent of the magnet coil body (8), in each case one fixing strip (32, 34), which is essentially continuous from one end piece (14) to the other end piece (15) of the magnet coil body (8), is arranged on one side face of the magnet coil body (8).

3. The magnetic rail brake device as claimed in claim 1, **characterized in that** a fixing strip (32) extends essentially continuously from one end piece (14) to the other end piece (15) of the magnet coil body (8), and the other fixing strip (34) is split into two parts, a connecting device (26) for a voltage source being arranged between the two parts (34a, 34b) of the fixing strip (34).

4. The magnetic rail brake device as claimed in at least one of the preceding claims, **characterized in that** the at least one fixing strip (32, 34) forms a welded assembly with the magnet coil body (8).

5. The magnetic rail brake device as claimed in at least one of the preceding claims, **characterized in that** at least one fixing strip (32, 34) is fixed detachably to flanges (30) for actuating cylinders, track holders (28) or other attachment parts.

## Revendications

1. Dispositif (4) de frein électromagnétique sur rails d'un véhicule ferroviaire, comprenant au moins un aimant (2) de frein qui comprend un corps (8) de bobine d'électro-aimant sur lequel sont maintenus mobiles plusieurs éléments d'aimant magnétiques, ainsi qu'au moins une barrette (32, 34) de fixation s'étendant parallèlement à l'étendue longitudinale du corps (8) de bobine d'électro-aimant et directement en relation avec lui pour la fixation de l'aimant (2) de frein sur d'autres éléments constitutifs du dispositif (4) de frein électromagnétique, **caractérisé en ce que** la barrette (32, 34) de fixation est en matériau diamagnétique ou paramagnétique.

2. Dispositif de frein électromagnétique suivant la revendication 1, **caractérisé en ce que**, vu dans la direction longitudinale du corps (8) de bobine d'électro-aimant, il est disposé respectivement, sur une surface latérale du corps (8) de la bobine d'électro-aimant, une barrette (32, 34) de fixation allant sensiblement en continu d'une pièce (14) d'extrémité à l'autre pièce (14) d'extrémité du corps (8) de bobine d'électro-aimant.

3. Dispositif de frein électromagnétique, suivant la revendication 1, **caractérisé en ce qu'**une barrette (32) de fixation s'étend sensiblement en continu d'une pièce (14) d'extrémité à l'autre pièce (15) d'extrémité du corps (8) de bobine d'électro-aimant et l'autre barrette (34) de fixation est subdivisée en deux, un dispositif (26) de connexion d'une source de tension étant interposé entre les deux parties (34a, 34b) de la barrette (34) de fixation.

4. Dispositif de frein électromagnétique, suivant l'une au moins des revendications précédentes, **caractérisé en ce que** la au moins une barrette (32, 34) de fixation forme un module de soudure avec le corps (8) de bobine d'électro-aimant.

5. Dispositif de frein électromagnétique, suivant l'une au moins des revendications précédentes, **caractérisé en ce qu'**au moins une barrette (32, 34) de fixation est fixée de manière amovible à des brides (30) de vérin d'actionnement, d'entretoises (28) ou d'autres parties surajoutées.
